# EUROPÄISCHE PATENTSCHRIFT

(11) **EP 2 184 145 B1**
(45) Veröffentlichungstag und Bekanntmachung des Hinweises auf die Patenterteilung: **28.09.2011**
(21) Anmeldenummer: 09175168.5
(22) Anmeldetag: 05.11.2009
(51) Int. Cl.: B27N 3/28, B62D 25/20

(54) **Transportboden**
Transport base
Sol de transport

(30) Priorität: 06.11.2008 DE 102008056118
(43) Veröffentlichungstag der Anmeldung: 12.05.2010
(73) Patentinhaber: Novo-Tech GmbH & Co. KG, 06449 Aschersleben (DE)
(72) Erfinder: Sasse, Holger, 06449, Groß-Schierstedt (DE)
(74) Vertreter: Dantz, Jan Henning

(56) Entgegenhaltungen:
- WO-A1-88/06127
- WO-A1-97/10396
- GB-A- 2 382 598
- NOVO-TECH GmbH & Co. KG. Gross Schierstedt: "Tierisch langlebig. Die Barfussdiele megawood." Januar 2008 (2008-01), XP002567435 Gefunden im Internet: URL:http://tiny.cc/As4Em> [gefunden am 2010-02-08]

## Beschreibung

Die vorliegende Erfindung betrifft einen Transportboden, insbesondere für Straßen- und Schienenfahrzeuge oder Schiffe, mit einem fahrzeugseitig festgelegten Gestell, auf dem eine Vielzahl von Paneelen festgelegt sind.

Es gibt Transportböden für Fahrzeuge, bei denen ein Gestell aus Metall mit Paneelen aus einem Holzwerkstoff überdeckt sind. Solche Transportböden sind einer rauen Umgebung ausgesetzt und werden durch Feuchtigkeit und Verschmutzung belastet. Eindringende Feuchtigkeit sorgt für ein Aufquellen des Holzwerkstoffes, so dass die Paneele in regelmäßigen Abständen ausgewechselt werden müssen, damit sie den hohen Belastungen beim Transport von Gegenständen standhalten. Die Montage der einzelnen Paneele auf dem Transportboden ist dabei vergleichsweise aufwändig, da diese kleinformatig sind und daher eine Vielzahl von Befestigungsmitteln montiert werden müssen.

Die WO 97/10396 offenbart einen Bodenbelag für Frachtfahrzeuge und Container, bei dem mehrere Paneele an ihren Längsseiten ineinander gesteckt werden. Die Paneele sind aus Kunststoff extrudiert und können Füllstoffe enthalten.

Die GB 2 382 598 offenbart einen Transportboden, der aus extrudierten Profilen hergestellt ist, die aus Kunststoff und weiteren Füllstoffen bestehen. Die Profile sind randseitig ineinander gesteckt.

Es ist daher Aufgabe der vorliegenden Erfindung, einen Transportboden zu schaffen, der gegenüber widrigen äußeren Umgebungseinflüssen robust ausgebildet ist und eine hohe Steifigkeit besitzt. Zudem soll eine einfache Montage möglich sein.

Diese Aufgabe wird mit einem Transportboden mit den Merkmalen des Anspruchs 1 gelöst.

Erfindungsgemäß sind die Paneele des Transportbodens aus einer Mischung aus lignozellulosehaltigen Fasern und Kunststoff extrudiert. Dadurch können die Paneele in großer Länge hergestellt werden, so dass nur wenige Paneele für einen großen Transportboden montiert werden müssen. Zudem können die aus lignozellulosehaltigen Fasern und Kunststoffbestehenden Paneele auch bei widrigen Umgebungsbedingungen eingesetzt werden, da sie robust gegenüber Feuchtigkeit und Verschmutzung sind. Insbesondere lassen sich die Paneele auch leicht reinigen.

Gemäß einer bevorzugten Ausgestaltung der Erfindung sind die Paneele als Hohlprofile ausgebildet Dadurch kann eine besonders gute Lastverteilung bei dem Transportboden erreicht werden. Zudem besitzen die Paneele nur ein geringes Eigengewicht, so dass die Transportkosten durch den leichteren Transportboden reduziert werden können. Die Querschnittsfläche der Hohlkammern beträgt vorzugsweise mindestens 40 %, insbesondere mehr als 50 % der gesamten Querschnittsfläche. Dadurch kann bei besonders geringem Eigengewicht eine großflächige Verlegung auf dem fahrzeugseitig festgelegten Gestell erfolgen.

Damit bei der Montage des Transportbodens nur wenige Paneele verlegt werden müssen, weisen diese vorzugsweise eine Länge von mehr als 3 m, insbesondere mehr als 6 m auf. Es ist auch möglich, dass die Paneele sich in Längsrichtung durchgängig über die gesamte Länge des Transportbodens erstrecken und eine Länge von beispielsweise 6,5 bis 13 m aufweisen, je nachdem wie lang der Transportboden ausgebildet ist.

Für eine einfache Befestigung der Paneele können diese randseitig an ihren Längskanten zumindest eine Nut aufweisen. In die Nut kann dann ein Vorsprung an einer Längskante eines benachbarten Paneels eingefügt sein. Alternativ ist es möglich, in die Nut ein Befestigungsmittel einzufügen, um das jeweilige Paneel an dem darunterliegenden Gestell festzulegen. Das Befestigungsmittel kann dabei als leistenförmiger Formkörper ausgebildet sein, der mit einem Vorsprung in eine Nut des Paneels eingreift und dieses klemmend an dem Gestell festlegt.

In einer weiteren Ausgestaltung der Erfindung sind die Paneele an ihrer Oberseite in Längsrichtung mit einer profilierten Oberfläche versehen, insbesondere sind Rillen und Rippen ausgebildet, die eine rutschhemmende Wirkung besitzen. Dadurch kann auch bei Nässe der Transportboden sicher begangen werden.

Für eine erhöhte Festigkeit ist die Oberfläche der Paneele geschliffen ausgebildet.

Um Gegenstände an dem Transportboden auf einfache Weise sichern zu können, sind vorzugsweise zwischen den Paneelen ein oder mehrere Leisten mit Öffnungen zur Festlegung von Spannelementen vorgesehen. Die Leisten können dabei auch als Befestigungsmittel zur Festlegung der Paneele ausgebildet sein, beispielsweise über randseitig hervorstehende Vorsprünge.

Für eine kostengünstige Herstellung der Paneele weisen diese einen Faseranteil zwischen 65 % und 85 % auf. Die Fasern können dabei aus Naturstoffen bestehen, insbesondere aus Holzfasern, Holzspänen, Stroh, Heu, Reis, Hanf, Sisal oder Mischungen solcher Fasern. Die Fasern werden vorzugsweise mit einem Kunststoff, wie Polypropylen oder Polyethylen gemischt und durch einen Extruder gepresst.

Für eine einfache Befestigung können die Paneele mit dem Gestell an einem Steg zwischen zwei Hohlkammern verschraubt sein. Dadurch besitzt die Befestigung eine ausreichende Festigkeit, da in dein Steg eine Verankerung erfolgt.

Gemäß einer alternativen Befestigung wird in mindestens eine Hohlkammer eines Paneels ein Formkörper eingefügt, der an dem Gestell festgelegt ist, insbesondere von der Unterseite des Gestells verschraubt ist. Dadurch kann die Oberfläche der Paneele glatt ohne hervorstehende Schraubenköpfe ausgebildet sein, wobei die Haltekräfte zum Gestell über die Formkörper bereitgestellt werden, die in den Hohlkammern der Paneele eingefügt sind. Dabei können an dem Paneel an der Unterseite ein oder mehrere Öffnungen ausgebildet sein, in die die Formkörper zur Festlegung der Paneele eingefügt werden. Die Befestigung der Paneele durch Formkörper in den Hohlkammern hat den Vorteil, dass die Paneele bei Temperaturunterschieden oder Feuchte eine gewisse Ausdehnung in Längs- und Querrichtung ausführen können, ohne dass die Befestigungsmittel stark belastet werden.

Die Erfindung wird nachfolgend anhand mehrerer Ausführungsbeispiele mit Bezug auf die beigefügten Zeichnungen näher erläutert. Es zeigen:
- Figur 1: eine Draufsicht auf einen erfindungsgemäßen Transportboden;
- Figur 2: eine Seitenansicht auf ein Paneel des Transportbodens der Figur 1;
- Figur 3: eine Seitenansicht auf ein modifiziertes Paneel für einen Transportboden, und
- Figur 4: eine Seitenansicht auf ein weiteres Ausführungsbeispiel eines Paneels für einen Transportboden.

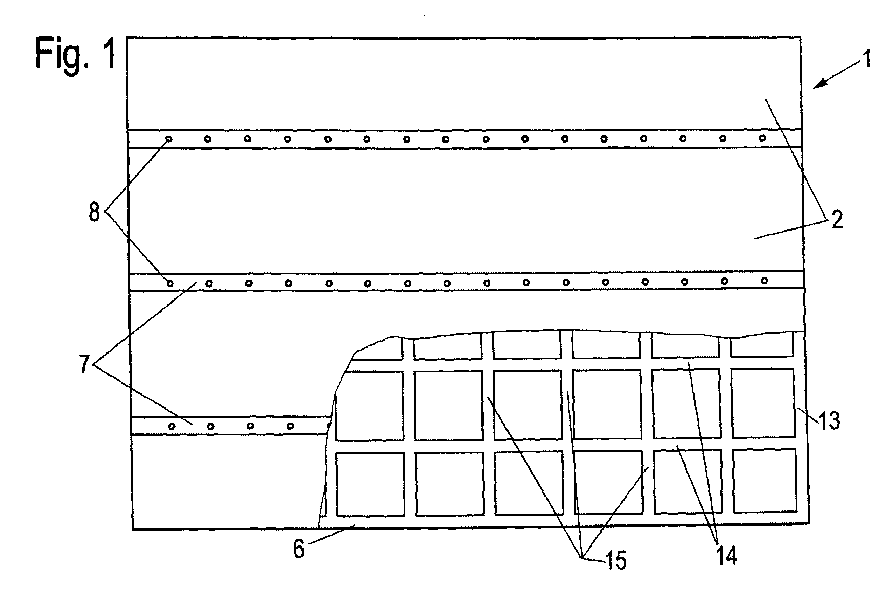

In Figur 1 ist ein Transportboden 1 gezeigt, der als Ladefläche auf einem Straßen- oder Schienefahrzeug eingesetzt werden kann, aber auch bei Schiffen oder anderen Fahrzeuge einsetzbar ist. Der Transportboden 1 umfasst eine Vielzahl von rechteckförmigen länglichen Paneelen 2, die auf einem Gestell 13 montiert sind. Das Gestell 13 aus Metall besteht aus einer Vielzahl von Längsstreben 14 und Querstreben 15, wobei die Querstreben 15 oberhalb der Längsstreben 14 angeordnet sind. Die Paneele sind auf den Querstreben 15 festgelegt. Das Gestell 13 ist fahrzeugseitig festgelegt.

Zwischen den Paneelen 2 sind Leisten 7 vorgesehen, die an ihrer Oberseite eine Vielzahl von Öffnungen 8 aufweisen, die zur Festlegung von Spannelementen zur Sicherung von zu transportierenden Gegenständen dienen. Der Transportboden 1 kann zudem randseitig an den Längskanten und/oder Stirnkanten U-förmige Profile, nach oben hervorstehende Wandelemente oder andere Bauteile aufweisen, die zur Vereinfachung in der Darstellung der Figur 1 weggelassen wurden. Insbesondere können an den seitlichen Wänden auch Befestigungsmittel für Spannelemente vorgesehen sein.

Die Paneele 2 bestehen aus einem extrudierten Material aus einer Mischung aus lignozellulosehaltigen Fasern und Kunststoff. Der Anteil an den Fasern liegt in einem Bereich zwischen 65 % und 85 %, während Kunststoff und weitere Additive in einem Anteil von 15 % bis 35 % vorhanden sind.

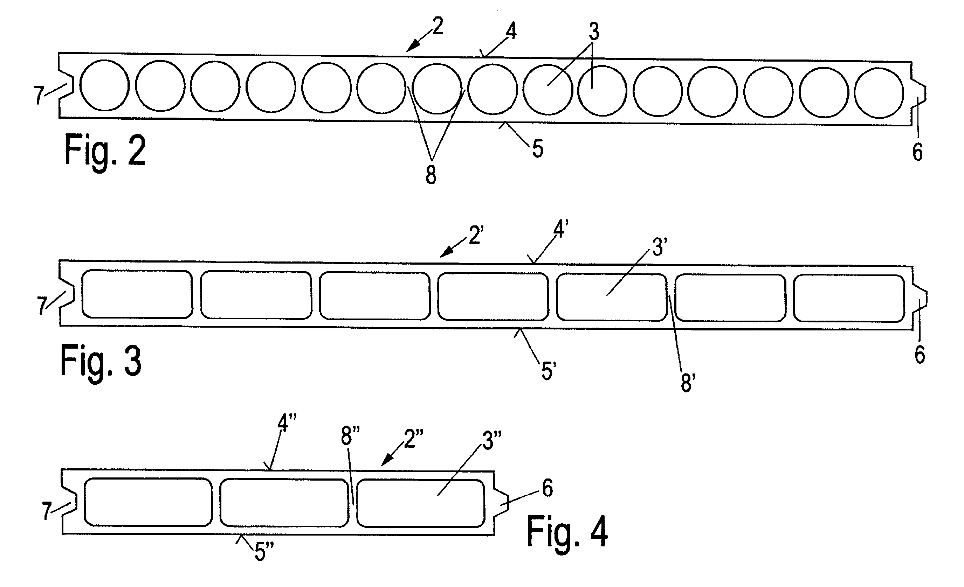

In Figur 2 ist ein Paneel 2 im Querschnitt dargestellt, das eine Vielzahl von kreisförmigen Hohlkammern 3 aufweist. Bezogen auf die Querschnittsfläche nehmen die Hohlkammern 3 eine Fläche von mindestens 40 % ein, so dass die Paneele 2 bezogen auf das Volumen ein geringes Eigengewicht aufweisen. Die Hohlkammern 3 sind über Stege 8 voneinander getrennt, so dass ein fachwerkartiger Aufbau gegeben ist, der eine hohe Festigkeit besitzt. Jedes Paneel 2 besitzt eine begehbare Oberfläche 4, die in Längsrichtung profiliert ausgebildet sein kann, beispielsweise mit Rippen und Rillen, damit eine hohe Rutschsicherheit gegeben ist. An der Oberseite 4 ist das Paneel 2 zudem geschliffen, so dass eine hohe Abriebfestigkeit und Beständigkeit gegeben ist. Eine Unterseite 5 an den Paneelen 2 kann wahlweise unbehandelt oder entsprechend der Oberfläche 4 ausgebildet sein.

Die Paneele 2 weisen an ihren Längskanten an einer Seite einen hervorstehenden keilförmigen Vorsprung 6 auf, der formschlüssig in eine Nut 7 eines benachbarten Paneels 2 eingefügt werden kann. Dadurch können mehrere Paneele 2 miteinander verriegelt werden.

In Figur 3 ist eine modifizierte Ausgestaltung eines Paneels 2' dargestellt, bei dem eine Vielzahl von im wesentlichen rechteckförmigen Hohlkammern 3' ausgebildet sind, die über Stege 8' voneinander getrennt sind. Jedes Paneel 2' weist eine begehbare Oberfläche 4' und eine Unterseite 5' auf. An den Längskanten ist zur Befestigung ein leistenförmiger Vorsprung 6 und eine Nut 7 ausgebildet.

Eine weitere Ausführungsform eines Paneels 2" ist in Figur 4 dargestellt, das etwa die halbe Breite des Paneels 2' besitzt. Auch das Paneel 2" weist im wesentlichen rechteckförmige Hohlkammern 3" auf, die über Stege 8" voneinander getrennt sind. An den Längskanten ist an einer Seite ein keilförmiger Vorsprung 6 und eine keilförmigen Nut 7 ausgebildet.

Die Breite der Paneele 2, 2' und 2" kann in einem Bereich zwischen 150 und 1000 mm liegen. Die Dicke beträgt zwischen 20 und 120 mm, vorzugsweise zwischen 25 und 40 mm. Die Länge der Paneele 2 kann aufgrund der Herstellung durch Extrusion nahezu beliebig gewählt werden. Vorzugsweise erstrecken sich die Paneele 2 über die gesamte Länge des Transportbodens 1, insbesondere können diese zwischen 6 und 14 m lang ausgebildet sein. Es ist auch möglich, über die Länge eines Transportbodens 1 zwei oder mehr Paneele 2 anzuordnen.

Für die Befestigung der Paneele 2 an dem Gestell 13 können Schrauben eingesetzt werden, die in die Stege 8, 8' oder 8'' eingedreht werden, so dass in diesem Bereich eine Verschraubung mit den Querstreben 15 des Gestells 13 erfolgt. Alternativ ist es möglich, leistenförmige Formkörper vorzusehen, die einen keilförmigen Vorsprung aufweisen, der in die Nut 7 eines Paneels 2 eingefügt ist. Die Paneele 2, 2' und 2" können an gegenüberliegenden Seiten Nuten 7 aufweisen, in die dann jeweils ein leistenförmiger Vorsprung eines Formkörpers eingefügt wird, wobei der Formkörper mit dem Gestell 13 verschraubt wird. Dadurch können die Paneele 2, 2' und 2" klemmend an dem Gestell 13 festgelegt sein.

Gemäß einer weiteren Alternative zur Befestigung der Paneele 2, 2' und 2" können Formkörper in die Hohlkammern 3, 3' oder 3'' eingefügt werden, die dann mit dem Gestell 13 verschraubt werden. Die Verschraubung kann dabei von der Unterseite des Gestells 13 erfolgen, so dass die Oberfläche 4, 4' und 4" keine hervorstehenden Schraubenköpfe oder andere Befestigungsmittel aufweist. Die Formkörper können in den Hohlkammern 3, 3', 3" durch entsprechende Öffnungen an der Unterseite 5, 5' oder 5'' eingefügt werden und dann die Paneele 2, 2' und 2" klemmend an dem Gestell 13 festlegen.

In dem dargestellten Ausführungsbeispiel sind zwischen den Paneelen 2 Leisten 7 zur Festlegung von Spannelementen vorgesehen. Es ist natürlich auch möglich, die Leisten 7 weg zu lassen und den Boden vollflächig mit Paneelen 2 zu belegen.

## Patentansprüche

1. Transportboden, insbesondere für Straßen- und Schienenfahrzeuge oder Schiffe, mit einem fahrzeugseitig festgelegten Gestell (13) auf dem eine Vielzahl von Paneelen (2, 2', 2") festgelegt sind, **dadurch gekennzeichnet, dass** die Paneele (2, 2', 2") aus einer Mischung aus lignozellulosehaltigen Fasern und Kunststoff extrudiert sind, wobei der Anteil an lignozellulosehaltigen Fasern in den Paneelen (2, 2', 2'') zwischen 65 % und 85 % liegt und die Paneele (2, 2', 2'') eine geschliffene Oberfläche aufweisen.

2. Transportboden nach Anspruch 1, **dadurch gekennzeichnet, dass** die Paneele (2, 2', 2'') als Hohlprofile ausgebildet sind.

3. Transportboden nach Anspruch 2, **dadurch gekennzeichnet, dass** die Querschnittsfläche der Hohlkammern (3, 3', 3'') mindestens 40 %, vorzugsweise mehr als 50 % der gesamten Querschnittsfläche einnimmt.

4. Transportboden nach einem der Ansprüche 1 bis 3, **dadurch gekennzeichnet, dass** die Paneele (2, 2', 2") eine Länge von mehr als 3 m, vorzugsweise mehr als 6 m aufweisen.

5. Transportboden nach einem der Ansprüche 1 bis 4, **dadurch gekennzeichnet, dass** sich die Paneele (2, 2', 2'') in Längsrichtung durchgehend über die gesamte Länge des Transportbodens erstrecken.

6. Transportboden nach einem der Ansprüche 1 bis 5, **dadurch gekennzeichnet, dass** die Paneele (2, 2', 2'') randseitig an ihrer Längskante eine Nut (7) aufweisen.

7. Transportboden nach Anspruch 6, **dadurch gekennzeichnet, dass** in die Nut (7) ein Vorsprung (6) an einer Längskante eines benachbarten Paneels (2, 2', 2") eingefügt ist.

8. Transportboden nach einem der Ansprüche 1 bis 7, **dadurch gekennzeichnet, dass** in die Nut (7) ein Befestigungsmittel eingefügt ist, um das jeweilige Paneel (2) an dem Gestell (13) festzulegen.

9. Transportboden nach Anspruch 8, **dadurch gekennzeichnet, dass** das Befestigungsmittel als leistenförmiger Formkörper ausgebildet ist, der an gegenüberliegenden Seiten jeweils einen Vorsprung aufweist, der jeweils in eine Nut (7) eines Paneels (2, 2', 2'') eingreift.

10. Transportboden nach einem der Ansprüche 1 bis 9, **dadurch gekennzeichnet, dass** die Paneele (2, 2', 2") an ihrer Oberseite eine in Längsrichtung profilierte Oberfläche aufweisen.

11. Transportboden nach einem der Ansprüche 1 bis 10, **dadurch gekennzeichnet, dass** zwischen zwei Paneelen (2, 2', 2") eine Leiste (7) mit Öffnung (8) zur Festlegung von Spannelementen vorgesehen ist.

12. Transportboden nach einem der Ansprüche 1 bis 11, **dadurch gekennzeichnet, dass** die Paneele (2, 2', 2") mit dem Gestell (13) an einem Steg (8, 8', 8'') zwischen zwei Hohlkammern (3, 3', 3") verschraubt sind.

13. Transportboden nach einem der Ansprüche 1 bis 12, **dadurch gekennzeichnet, dass** in eine Hohlkammer (3, 3', 3") eines Paneels (2, 2', 2") ein Formkörper eingefügt ist, der an dem Gestell (13) festgelegt ist.

14. Transportboden nach einem der Ansprüche 1 bis 13, **dadurch gekennzeichnet, dass** ein Paneel (2, 2', 2") an der zu dem Gestell (13) gewandten Seite mindestens eine Öffnung aufweist, in die ein Formkörper zur Festlegung des Paneels (2, 2', 2") eingefügt ist.

## Claims

1. Transport base, in particular for road and rail vehicles or ships, comprising a vehicle-fixed frame (13) on which a plurality of panels (2, 2', 2'') are fixed, **characterized in that** the panels (2, 2', 2") are extruded from a mixture of lignocellulose-containing fibres and plastic, wherein the proportion of lignocellulose-containing fibres in the panels (2, 2', 2'') is between 65% and 85% and the panels (2, 2', 2") have a ground surface.

2. Transport base according to Claim 1, **characterized in that** the panels (2, 2', 2'') are designed as hollow profiles.

3. Transport base according to Claim 2, **characterized in that** the cross-sectional area of the hollow chambers (3, 3', 3'') occupies at least 40%, preferably more than 50%, of the entire cross-sectional area.

4. Transport base according to one of Claims 1 to 3, **characterized in that** the panels (2, 2', 2'') have a length of more than 3 m, preferably more than 6 m.

5. Transport base according to one of Claims 1 to 4, **characterized in that** in the longitudinal direction the panels (2, 2', 2'') extend continuously over the entire length of the transport base.

6. Transport base according to one of Claims 1 to 5, **characterized in that** the panels (2, 2', 2'') have a groove (7) on their longitudinal edge.

7. Transport base according to Claim 6, **characterized in that** a projection (6) on a longitudinal edge of an adjacent panel (2, 2', 2'') is inserted into the groove (7).

8. Transport base according to one of Claims 1 to 7, **characterized in that** a fastening means is inserted into the groove (7) in order to fix the respective panel (2) to the frame (13).

9. Transport base according to Claim 8, **characterized in that** the fastening means is designed as a strip-shaped moulding which is provided on opposite sides with a respective projection which in each case engages into a groove (7) of a panel (2, 2', 2'').

10. Transport base according to one of Claims 1 to 9, **characterized in that** the panels (2, 2', 2'') have on their upper side a surface which is profiled in the longitudinal direction.

11. Transport base according to one of Claims 1 to 10, **characterized in that** a strip (7) with opening (8) for fixing clamping elements is provided between two panels (2, 2', 2'').

12. Transport base according to one of Claims 1 to 11, **characterized in that** the panels (2, 2', 2") are screwed to the frame (13) at a web (8, 8', 8'') between two hollow chambers (3, 3', 3'').

13. Transport base according to one of Claims 1 to 12, **characterized in that** a moulding which is fixed to the frame (13) is inserted into a hollow chamber (3, 3', 3") of a panel (2, 2', 2'').

14. Transport base according to one of Claims 1 to 13, **characterized in that** a panel (2, 2', 2'') has at least one opening on the side facing the frame (13), into which opening a moulding for fixing the panel (2, 2', 2'') is inserted.

## Revendications

1. Sol de transport, en particulier pour véhicules routiers et sur rails ou bateaux, comportant un châssis (13) fixé côté véhicule, sur lequel est fixée une pluralité de panneaux (2, 2', 2"), **caractérisé en ce que** les panneaux (2, 2', 2") sont extrudés dans un mélange de fibres contenant de la lignocellulose et du plastique, la part de fibres contenant de la lignocellulose dans les panneaux (2, 2', 2") étant comprise entre 65 et 85 % et les panneaux (2, 2', 2") présentant une surface rectifiée.

2. Sol de transport selon la revendication 1, **caractérisé en ce que** les panneaux (2, 2', 2") sont réalisés comme des profilés creux.

3. Sol de transport selon la revendication 2, **caractérisé en ce que** la superficie de la section des chambres creuses (3, 3', 3") occupe au moins 40 %, de préférence plus de 50 % de la superficie de la section entière.

4. Sol de transport selon l'une quelconque des revendications 1 à 3, **caractérisé en ce que** les panneaux (2, 2', 2") présentent une longueur supérieure à 3 m, de préférence à 6 m.

5. Sol de transport selon l'une quelconque des revendications 1 à 4, **caractérisé en ce que** les panneaux (2, 2', 2") s'étendent en continu dans le sens longitudinal sur toute la longueur du sol de transport.

6. Sol de transport selon l'une quelconque des revendications 1 à 5, **caractérisé en ce que** les panneaux (2, 2', 2") présentent une rainure (7) côté bord sur leur côté longitudinal.

7. Sol de transport selon la revendication 6, **caractérisé en ce qu'**une saillie (6) est insérée dans la rainure (7) sur une arête longitudinale d'un panneau contigu (2, 2', 2").

8. Sol de transport selon l'une quelconque des revendications 1 à 7, **caractérisé en ce qu'**un moyen de fixation est inséré dans la rainure (7) afin de fixer le panneau respectif (2) sur le châssis (13).

9. Sol de transport selon la revendication 8, **caractérisé en ce que** le moyen de fixation est réalisé comme un corps moulé en forme de baguette qui présente respectivement une saillie sur des côtés opposés, laquelle s'engage respectivement dans une rainure (7) d'un panneau (2, 2', 2").

10. Sol de transport selon l'une quelconque des revendications 1 à 9, **caractérisé en ce que** les panneaux (2, 2', 2") présentent, sur leur côté supérieur, une surface profilée dans le sens longitudinal.

11. Sol de transport selon l'une quelconque des revendications 1 à 10, **caractérisé en ce qu'**une baguette (7) avec une ouverture (8) pour la fixation d'éléments tendeurs est prévue entre deux panneaux (2, 2', 2").

12. Sol de transport selon l'une quelconque des revendications 1 à 11, **caractérisé en ce que** les panneaux (2, 2', 2") sont vissés au châssis (13) sur une traverse (8, 8', 8") entre deux chambres creuses (3, 3', 3").

13. Sol de transport selon l'une quelconque des revendications 1 à 12, **caractérisé en ce qu'**un corps moulé fixé sur le châssis (13) est inséré dans une chambre creuse (3, 3', 3") d'un panneau (2, 2', 2").

14. Sol de transport selon l'une quelconque des revendications 1 à 13, **caractérisé en ce qu'**un panneau (2, 2', 2") présente, sur le côté tourné vers le châssis (13), au moins une ouverture, dans laquelle un corps moulé est inséré pour la fixation du panneau (2, 2', 2").
